# EUROPEAN PATENT APPLICATION

(11) **EP 1 557 989 A1**
(43) Date of publication of application: **27.07.2005**
(21) Application number: 05000331.8
(22) Date of filing: 10.01.2005
(51) Int. Cl.: H04L 12/58, H04L 29/06

(54) **System and method for making multimedia message service compatible**

(30) Priority: 20.01.2004 KR 2004004538; 24.12.2004 KR 2004112287
(71) Applicant: LG ELECTRONICS INC., Seoul (KR)
(72) Inventor: Kim, Jung-Ae, Geumcheon-Gu Seoul (KR)
(74) Representative: von Hellfeld, Axel, Dr. Dipl.-Phys.

(57) **Abstract**

A system and method for making a multimedia message service compatible are disclosed to transmit a multimedia message created in an MMS-supported terminal to an MMS-not-supported terminal. The MMS-not-supported terminal receives an URL of a multimedia message that has been converted into a format that can be implemented in the MMS-not-supported terminal and an access code allowing access to the URL, accesses the URL by using the access code as an authentication. Accordingly, a user of the MMS-not-supported terminal can check the multimedia message.

## Description

### BACKGROUND OF THE INVENTION

### 1. Field of the Invention

The present invention relates to a multimedia message service and, more particularly, to a system and method for making multimedia message service compatible capable of enabling a terminal that does not support a multimedia message service to receive a multimedia message created by a terminal supporting a multimedia message service.

### 2. Description of the Related Art

A multimedia message service (MMS) is a message service for adding a visual or audible factor to a text-based short message in order to transmit video, a combined image or background music together with a text message.

As interests on and users of the MMS are increasing, demands on terminals that can provide the MMS (refer to as 'MMS-supported terminal', hereinafter) are growing more than terminals that does not support the MMS (refer to as 'MMS-not-supported terminal', hereinafter) but provide only a short message service (SMS).

A related art mobile communication system does not define a method for allowing the MMS-not-supported terminal to check a multimedia message created by the MMS-supported terminal, so that the MMS-not-supported terminal cannot check the multimedia message created by the MMS-supported terminal. Thus, if the multimedia message created by the MMS-supported terminal is transmitted to a user of the MMS-not-supported terminal, only notification information informing about reception of text information included in the multimedia message or multimedia message.

If the receiver using the MMS-not-supported terminal wants to check the multimedia message, he/she should be connected to a Web server storing the multimedia message through a PC (Personal Computer).

As mentioned above, the multimedia message created by the MMS-supported terminal cannot be checked by the MMS-not-supported terminal, and if the user of the MMS-not-supported terminal wants to check the multimedia message, he/she must access the Web server which stores the multimedia message through an Internet connection unit, not directly by the MMS-not-supported terminal, causing users' inconvenience.

### SUMMARY OF THE INVENTION

Therefore, an object of the present invention is to provide a system and method for making multimedia message service compatible capable of allowing an MMS-not-supported terminal to check a multimedia message created by an MMS-supported terminal.

To achieve at least the above objects in whole or in parts, there is provided a system for making a multimedia message service compatible including: a first system for converting a format of a multimedia message and transmitting a URL (Uniform Resource Locator) and an access code of the converted multimedia message, if the multimedia message transmitted from a transmission terminal cannot be implemented in a receiving terminal; a second system for transmitting the URL and the access code received from the first system to the receiving terminal; and the receiving terminal connected to the URL to receive the converted multimedia message.

The system for making a multimedia message service compatible further includes: a WAP (Wireless Application Protocol) gateway for transmitting a request for a multimedia message and its response message between the first system and the receiving terminal.

To achieve the above object, there is also provided a method for making multimedia message service compatible including: a step in which if a receiving terminal is an MMS non-supported terminal, a first system converts a multimedia message into a format supportable in the receiving terminal and informs the receiving terminal about a URL and an access code of the converted multimedia message through the second system; a step in which the receiving terminal requests the multimedia message stored in the URL through a WAP gateway; and a step in which the first system performs authentication on the request and transmits the converted multimedia message to the receiving terminal through the WAP gateway.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figure 1 illustrates the construction of a system for making a multimedia message service compatible in accordance with one embodiment of the present invention;
Figure 2 is a block diagram showing the construction of an MMS system in accordance with the preferred embodiment of the present invention;
Figure 3 illustrates the construction of a system for making a multimedia message service compatible in accordance with another embodiment of the present invention;
Figure 4A and 4B are flow charts of a method for making multimedia message service compatible in accordance with one embodiment of the present invention;
Figure 5 is a flow chart of a method for making multimedia message service compatible in accordance with another embodiment of the present invention;
Figures 6A and 6B are conceptual view of a method for transmitting a URL and an access code;
Figure 7 is a signal flow chart showing implementation of Figure 4; and
Figure 8 is a signal flow chart showing implementation of Figure 5.

### DETAILED DESCRIPTION OF THE PREFERRED EMBODIMENTS

A system and method for making a multimedia message service compatible in accordance with preferred embodiments of the present invention will be described with reference to the accompanying drawings.

The system and method for making a multimedia message compatible of the present invention is constructed such that when a multimedia message created in an MMS-supported terminal is transmitted to an MMS-not-supported terminal, the MMS-not-supported terminal receives a URL (Uniform Resource Locator) of the multimedia message that has been converted into a format that can be implemented in the MMS-non-supported terminal and an access code allowing access to the URL, and accesses the URL by using the access code as authentication means, whereby a user of the MMS-not-supported terminal can check the multimedia message.

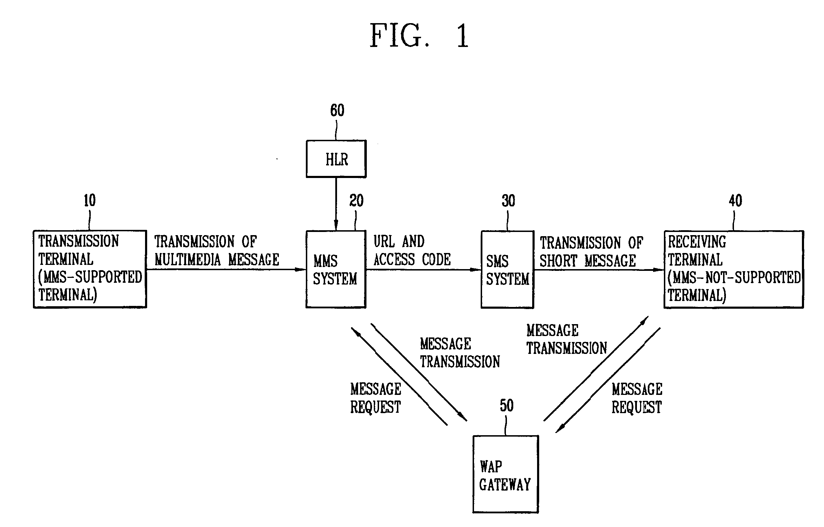

Figure 1 illustrates the construction of a system for making a multimedia message service compatible in accordance with one embodiment of the present invention. Namely, the system is to make a multimedia message compatible between the MMS-supported terminal and the MMS-not-supported terminal.

As shown in Figure 1, the system for making a multimedia message service compatible includes: a transmission terminal 10 having an MMS client and transmitting a multimedia message created by a sender; an MMS system 20 for converting/storing the multimedia message into/in a multimedia message format supported by a receiving terminal 40 if the receiving terminal 40 is the MMS-not-supported terminal to which the multimedia message is to be transmitted, and producing a URL of the converted multimedia message and an access code allowing access to the URL; an SMS system 30 for transmitting a short message informing about whether to receive the multimedia message or including the URL and the access code produced in the MMS system 20 to the receiving terminal 40; the receiving terminal for requesting the multimedia message by extracting the URL and the access code included in the short message and performing an authentication procedure for accessing the URL, and outputting the multimedia message through a browser mounted in the terminal; a WAP gateway 50 serving as a proxy for a multimedia message request and response between the MMS system 20 and the SMS system 30; and an HLR (Home Location Register) 60 for storing specific information of terminals connected by a network.

The transmission terminal 10 is the MMS-supported terminal and the receiving terminal 40 is the MMS-not-supported terminal.

The MMS system 20 is a generic name of various devices related to the MMS, including an MMS proxy relay, an MMS relay server and an MMS center (MMSC).

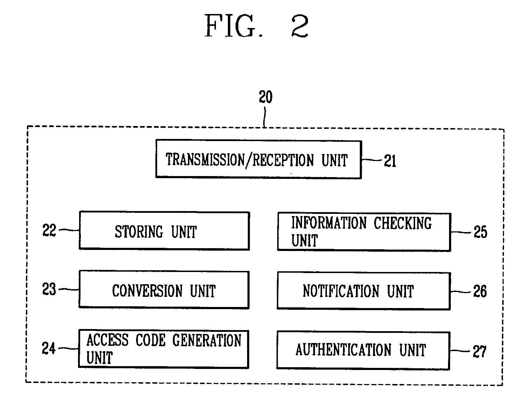

Figure 2 is a block diagram showing the construction of an MMS system in accordance with the preferred embodiment of the present invention.

The MMS system 20 includes a transmission/reception unit 21 for receiving the multimedia message from the MMS-supported transmission terminal 10, checking an address of the receiving terminal 40 and transmitting the multimedia message and various types of information to the receiving terminal 40; a conversion unit 23 for converting the multimedia message into a document of a format that can be outputted from a browser of the receiving terminal 40; a storing unit 22 for storing the multimedia message and the document that has been converted in the conversion unit 23; an access code generation unit 24 for generating an access code allowing access to a specific URL by using a random number generation algorithm or the like and storing it; an information checking unit 25 for checking interworking programs mounted in the receiving terminal 40; a notification unit 26 for notifying the receiving terminal 40 of arrival of the multimedia message; and an authentication unit 27 for performing authentication to allow access to the URL of the converted multimedia message.

The storing unit 22 includes a first region for storing the multimedia message received from the receiving terminal 40 and a second region for storing the document converted into a format supported by the MMS-not-supported terminal of the multimedia message stored in the first region.

That is, the storing unit 22 stores the received multimedia message and the format-converted multimedia message in different regions. The storing unit 22 can exist as a storing medium outside the MMS system 20 as well as inside of the MMS system 20.

The conversion unit 23 converts the multimedia message into a ML (Markup Language) such as a WML (Wireless Markup Language), an XHTML (Extensible Hypertext Markup Language) and a CHTML (Compact HTML) or other similar format so that the MMS-not-supported terminal can check it. For example, the conversion unit 23 converts the multimedia message into a WML document of a form of text/vnd,wap,wml, application/vnd.wap,wlmc, or image/vnd.wap.wbmp.

The information checking unit 25 provides information for checking whether programs interworking by a providing service such as an MMS client, browser or a multimedia player have been mounted in the receiving terminal 40.

The authentication unit 27 performs an authentication process for a receiver to access the URL of the WML document by using an inputted identifier and information of the receiving terminal 40. In this case, besides the method of authenticating with the identifier, the authentication unit 27 can also perform authentication by using a method of authenticating with information of a receiving terminal such as a MSISDN (Mobile Station Integrated System Digital Network) or a MIN (Mobile Identification Number), a method in which a receiving terminal transformed by a security algorithm authenticates information, a method in which a receiver inputs a password that has been previously set to access the MMS system, or by using two or more methods in combination.

When transmission of a notification message informing of arrival of the multimedia message through the notification unit 26 of the MMS system 20 is requested or transmission of a message including the URL and the access code transmitted from the MMS system 20 is requested, the SMS system 30 generates a short message including the information and transmits the short message to the MMS-not-supported terminal 40. The short message includes a text inquiring a receiver of whether to receive the multimedia message or whether to access the URL.

The SMS system 30 can add the whole or a part of the text included in the multimedia message to the short message and transmits it. In this case, transmission capacity of one time of the short message is limited, so if the text exceeds capacity of the short message, the SMS system 30 cuts the text by units of certain capacity and then transmits them as one or more short messages.

The MMS-not-supported terminal 40 checks whether the multimedia message has arrived, extracts the URL and the access code of the WML document from the short message, is connected to the URL to request the multimedia message, and implements the multimedia message received through the WAP gateway 50. At this time, the MMS-not-supported terminal 40 basically includes a browser for implementing a text and an image, and additionally includes a multimedia player for reproducing video.

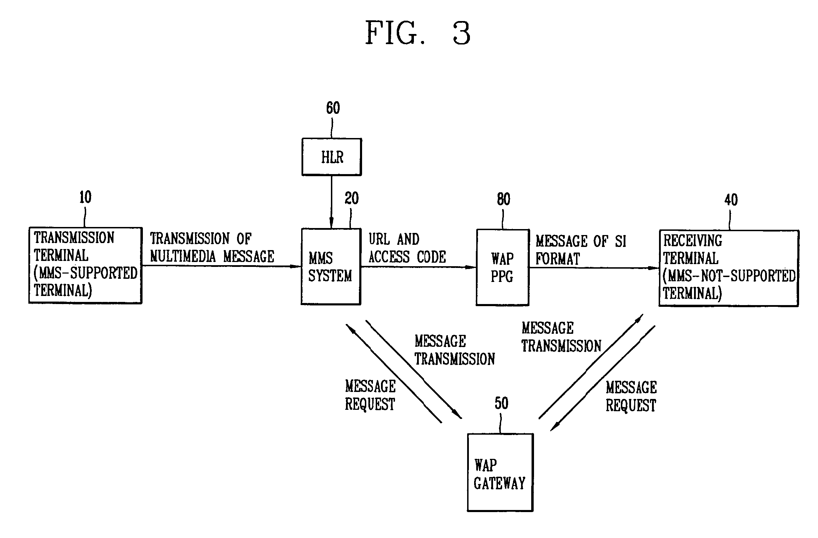

Figure 3 illustrates the construction of a system for making a multimedia message service compatible in accordance with another embodiment of the present invention, which includes a WAP PPG (Push Proxy Gateway) in place of the SMS system.

When transmission of a notification message informing of arrival of a multimedia message through the notification unit 26 of the MMS system is requested, or when transmission of a message including the URL and the access code transmitted from the MMS system 20 is requested, the WAP PPG 80 transmits a message in a format of an SI (Service Indication) to the MMS-not-supported terminal 40. The SI includes a short message inquiring a receiver of whether to receive the multimedia message or the URL.

The WAP PPG 80 transmits the SI format message in a connection-originated method or a connectionless method. When the message is transmitted in the connection-oriented method, the WAP PPG 80 connects a session between the WAP PPG 80 itself and the MMS-not-supported terminal 40, transmits the SI-format message, and then cuts off the session connection. In the case that the message is transmitted in the connectionless method, the WAP PPG 80 transmits the SI-format message without connecting a session with the MMS-not-supported terminal 40.

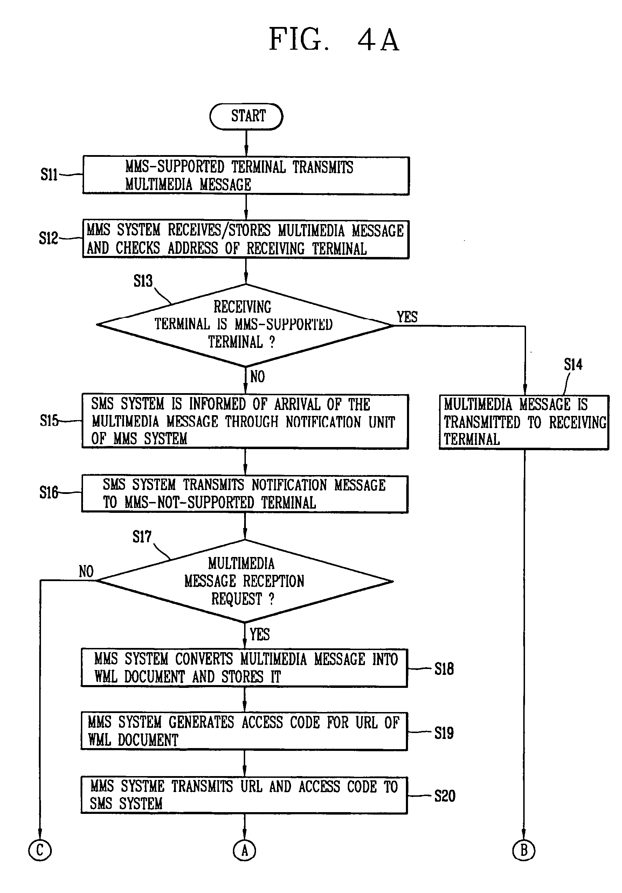

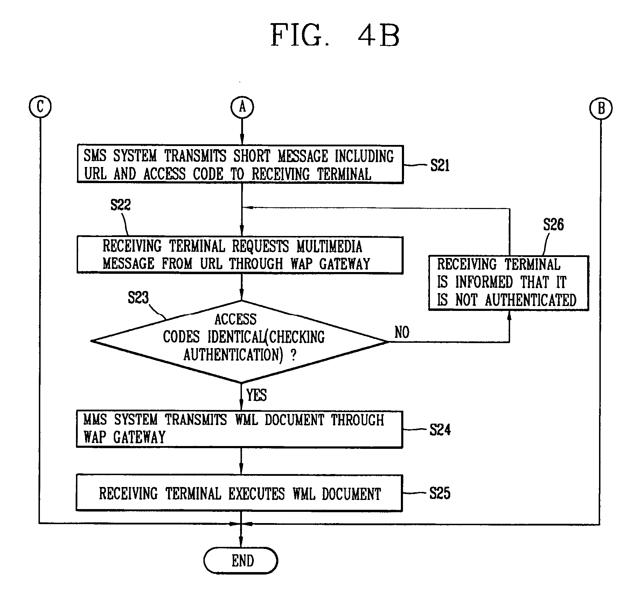

Figure 4A and 4B are flow charts of a method for making multimedia message service compatible in accordance with one embodiment of the present invention.

The operation of the system for making the multimedia message compatible will now be described.

First, when a sender transmits a created multimedia message through the MMS-supported terminal 10 (step S11), the MMS system 20 receives the multimedia message through the transmission/reception unit 21, stores it in the storing unit 22, and checks an address (phone number) of the receiving terminal 40 for receiving the multimedia message through the HLR 60 (step S12). In this case, the multimedia message includes one of a text, an image, video or audio.

The MMS system 20 checks information on the receiving terminal 40 through the information checking unit 25 (step S13). In this case, the MMS system 20 checks whether the receiving terminal 40 is the MMS-supported terminal or includes interworking programs such as an MMS client, a non-MMS client a browser or a multimedia player.

Herein, whether the receiving terminal is the MMS-supported terminal or not can be discriminated depending on whether the receiving terminal includes the MMS client supporting implementation of the multimedia message.

If the receiving terminal 40 is the MMS-supported terminal (step S13), the MMS system 20 transmits the multimedia message to the receiving terminal 40 (step S14). If the receiving terminal 40 is the MMS-not-supported terminal (step S13), the MMS system 20 informs the SMS system 30 that the multimedia message is standby to be transmitted to the receiving terminal 40 through the notification unit 26 (step S15).

The SMS system 30 transmits a notification message informing about the existence of the multimedia message to the receiving terminal 40 (step S16). In this case, the notification message is a short message including a text inquiring the receiver whether to receive the multimedia message, and in this case, the notification message can include a part or the whole of the text included in the multimedia message.

Upon checking the notification message, if the user allows reception of the multimedia message (step S17), the receiving terminal 40 transmits a response message requesting the multimedia message to the MMS system 20 through the WAP gateway 50, and the MMS system 20 receives the response message, converts the multimedia message into a message form that can be supported by the receiving terminal 40 through the conversion unit 23, and stores it in the storing unit 22. The storing unit 22 includes a region for storing the converted message, and can be exist as a storage medium outside the MMS system 20.

Herein, it is assumed that the conversion unit 23 converts the multimedia message into the WML document.

An access code generation unit 24 of the MMS system 20 generates an access code allowing access to a URL of the WML document and stores it (step S19)., and then, transmits a message including the generated access code and the URL to the SMS system 30 through the transmission/reception unit 21 (step S20). The access code generation unit 24 generates a different access code each time by using the random number generation algorithm.

Upon receiving the URL and the access code from the MMS system 20, t he SMS system 30 transmits the short message including the URL and the access code to the receiving terminal 40 (step S21), and when the receiver checks the short message through the receiving terminal 40 and requests access to the URL, the receiving terminal 40 transmits a request message through the WAP gateway 50 so as to be connected to the URL (step S22). In this case, the request message is a response message that is includes the access code and is automatically transmitted when the receiver checks/inputs the access code included in the short message or when the receiver checks the short message.

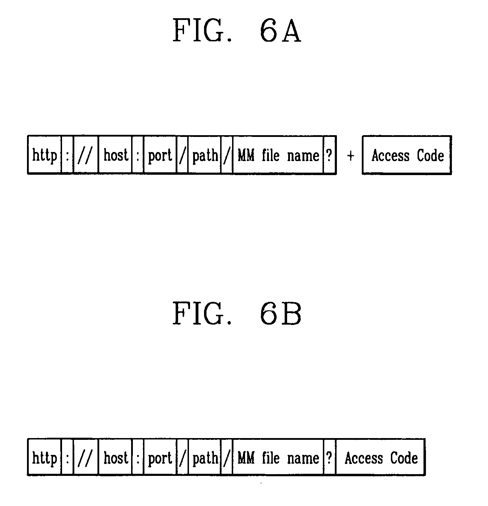

The MMS system 20 separates and transmits the URL and the access code as shown in Figure 6A, or combines and transmits the URL and the access code as shown in Figure 6B.

When the receiving terminal is connected to the URL, the MMS system 20 performs an authentication checking procedure on the receiving terminal 40 through the authentication unit 27 (step S23). Namely, the MMS system 20 determines whether the access code included in the request message is identical to the access code stored in the authentication unit 27, and then, if the two access codes are identical, the MMS system 20 authenticates the receiving terminal 40. If, however, the access codes are not identical, the MMS system 20 does not authenticate the receiving terminal and informs the receiving terminal 40 accordingly (step S26).

The authentication checking procedure can be performed in other ways than the method of using the access code. One of the methods is to perform authentication by using specific information (MSISDN or MIN) of the receiving terminal 40. That is, specific information (MSISDN or MIN) of the receiving terminal 40 and specific information of the receiving terminal 40 previously stored in the HLR are compared, and if the former and latter specific information are identical, the receiving terminal is authenticated, or otherwise, the receiving terminal is not authenticated.

In a different embodiment of the authentication checking procedure, the authentication unit 27 performs authentication by using the access code and the specific information of the receiving terminal 40. That is, the access code and the specific information transmitted from the receiving terminal 40 are compared with the access code stored in the authentication unit 27 and the specific information stored in the HLR, and if the both access codes and specific information are all identical, the receiving terminal is authenticated, and if even one of them is not identical, the receiving terminal is not authenticated.

In addition, in order to perform the authentication checking procedure, a method of authenticating the receiving terminal by comparing a password previously set in the MMS system 20 by the receiver and a password inputted through the receiving terminal by the receiver, and also a method of authenticating the receiving terminal with information of the receiving terminal 40 transformed by the security algorithm can be also used. In this case, the authentication unit 27 can authenticate the terminal by combining two or more methods.

When the receiving terminal is authenticated, the MMS system 20 transmits the multimedia message stored as the WML document in the URL requested to be accessed by the receiving terminal 40, to the receiving terminal 40 through the WAP gateway 50 (step S24). Upon receiving the multimedia message, the receiving terminal 40 executes the mounted browser so that the receiver can check the multimedia message (step S25). At this time, if video is included in the multimedia message, the receiving terminal 40 executes the multimedia player to reproduce the video.

A signal transmitted and received between the MMS system 20 and the WAP gateway 50 is an HTTP (Hypertext Transfer Protocol), while a signal transmitted and received between the WAP gateway 50 and the MMS-not-supported terminal 40 is a WSP (Wireless Session Protocol). Namely, the request message transmitted through the WAP gateway 50 from the MMS-not-supported terminal 40 is transmitted as the WSP between the MMS-not-supported terminal 40 and the WAP gateway 50, converted into the HTTP through the WAP gateway 50, and then transmitted to the MMS system 20.

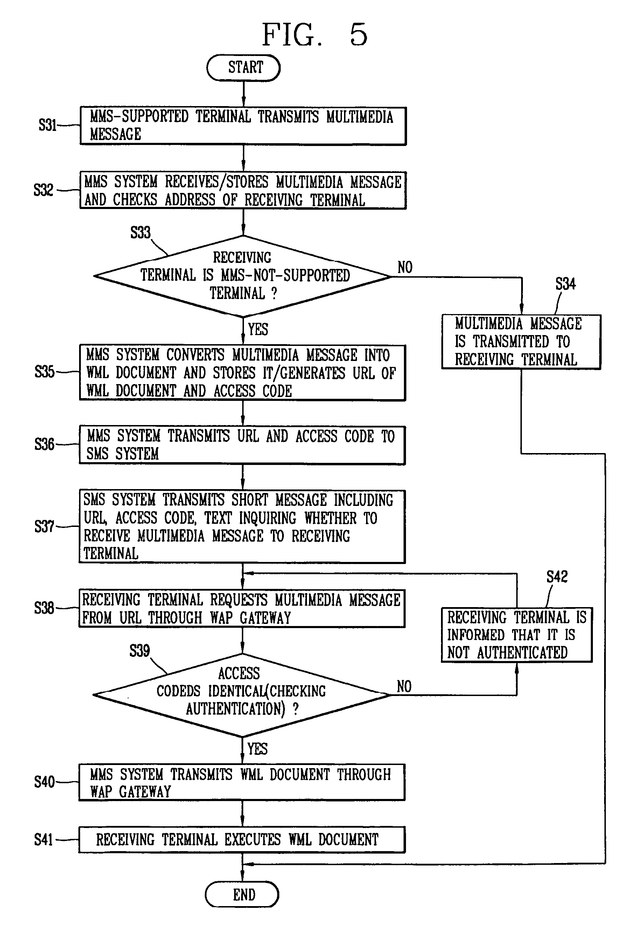

Figure 5 is a flow chart of a method for making multimedia message service compatible in accordance with another embodiment of the present invention.

When a sender sends the multimedia message created through the MMS-supported terminal 10 (step S31), the MMS system 20 receives the multimedia message through the transmission/reception unit 21 and stores it in the storing unit 22, and then, checks a phone number of the receiving terminal 40 to which the multimedia message is to be transmitted through the HLR 60 (step S32).

The MMS system 20 checks information on the receiving terminal 40 through the information checking unit 25 (step S33). At this time, the MMS system 20 checks whether the receiving terminal 40 is the MMS-supported terminal or whether an interworking program such as the MMS client, non-MMS client, a browser or a multimedia player has been mounted.

If the receiving terminal 40 is the MMS-supported terminal having the MMS client, the MMS system 20 transmits the multimedia message stored in the storing unit 22 to the receiving terminal 40 (step S34).

However, if the receiving terminal 40 is the MMS-not-supported terminal that does not have the MMS client, the MMS system 20 converts the multimedia message stored in the storing unit 22 into a message of a format supported by the receiving terminal 40 through the conversion unit 23 and then stores it in the storing unit 22 (step S35). The region where the multimedia message and the region where the converted message is stored are different, and the conversion unit converts the multimedia message into a WML document.

The access code generation unit 24 of the MMS system 20 generates an access code allowing to access a URL of the WML document and stores it (step S35). The message generated in the notification unit 26 including the generated access code and the URL is transmitted to the SMS system 30 via the transmission/reception unit 21 (step S36). The access code generation unit 24 generates a different access code each time by using the random number generation algorithm.

Upon receiving the URL of the WML document and the access code allowing access to the URL from the MMS system 20, the SMS system 30 transmits the URL, the access code, a text informing that the multimedia message is in standby to be transmitted to the MMS system 20, and a short message including the whole or a part of the text included in the multimedia message, to the receiving terminal 40 (step S37). In this case, if the size of the text of the multimedia message exceeds capacity that one short message can transmit, the text can be transmitted as two or more short messages or through two or more transactions.

Upon checking the short message transmitted to the receiving terminal 40, if the receiver accesses the URL and requests receipt of the multimedia message, the receiving terminal 40 transmits the request message including the access code to the MMS system 20 through the WAP gateway 50, to thereby request access to the URL (step S38). At this time, the request message is transmitted as the WSP between the receiving terminal 40 and the WAP gateway 50, and is transmitted as the HTTP between the WAP gateway 50 and the MMS system 20. The request message is a response message automatically transmitted by including the access code when the receiver checks/inputs the access code included in the short message or when the receiver checks the short message.

When the receiving terminal is connected to the URL, the MMS system 20 performs an authentication checking procedure on the receiving terminal 40 through the authentication unit 27 (step S39). Namely, the MMS system 20 determines whether the access code included in the request message is identical to the access code stored in the authentication unit 27, and then, if the two access codes are identical, the MMS system 20 authenticates the receiving terminal 40. If, however, the access codes are not identical, the MMS system 20 does not authenticate the receiving terminal and informs the receiving terminal 40 accordingly (step S42).

When the access codes are identical and thus the receiving terminal is authenticated, the MMS system 20 transmits the multimedia message stored as the WML document in the URL requested to be accessed by the receiving terminal 40, to the receiving terminal 40 through the WAP gateway 50 (step S40). Upon receiving the multimedia message, the receiving terminal 40 executes the mounted browser so that the receiver can check the multimedia message (step S41). At this time, if video is included in the multimedia message, the receiving terminal 40 executes the multimedia player to reproduce the video.

The embodiments of the method for making multimedia message service compatible take the example of the case in which the SMS system 30 transmits the notification message to the receiving terminal as shown in Figure 1, but they can be also applied for a case where the notification message is transmitted to the receiving terminal 40 through a WAP PPG 80.

The method for making the multimedia message service compatible by using the WAP PPG 80 is the same as the method for making the multimedia message service compatible by using the SMS system 30, except for the fact that a message of an SI format, in place of the short message, is pushed to the receiving terminal 40.

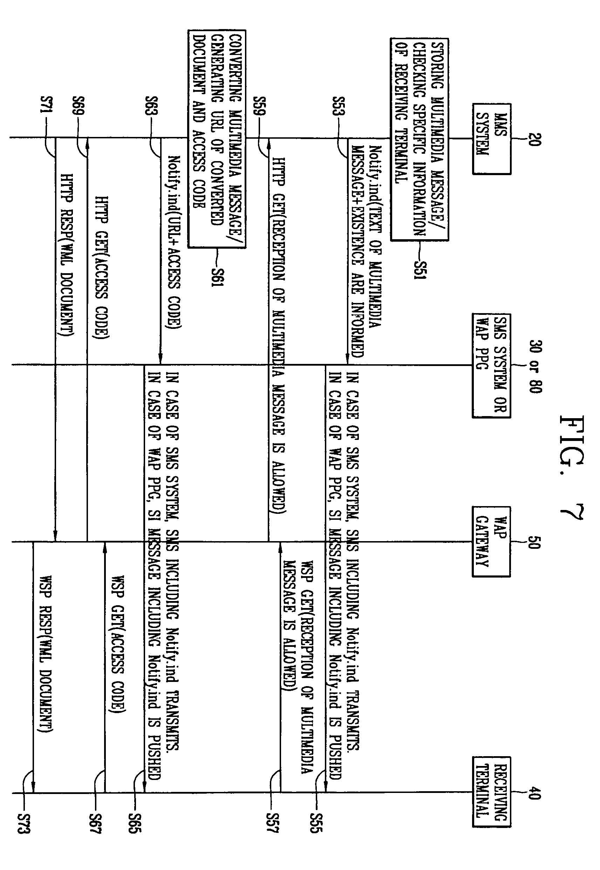

Figure 7 is a signal flow chart showing implementation of Figure 4.

After storing the multimedia message and checking the specific information of the receiving terminal 40 (step S51), the MMS system 20 transmits Notify.ind to the SMS system 30 or the WAP PPG 80 in order to inform about the existence of the multimedia message (step S53). The Notify.ind includes a part or the whole of the text included in the multimedia message.

The SMS system 50 converts the Notify.ind into an SMS format and then transmits it to the receiving terminal 40, and the WAP PPG 80 converts the Notify.ind into an SI format message and then pushes it to the receiving terminal 40 in the connection-oriented method or the connectionless method (step S55).

Upon receiving the short message or the SI message from the SMS system 30 or the WAP PPG 80, if the receiving terminal 40 allows reception of the multimedia message, the receiving terminal 40 transmits a WSP GET to the WAP gateway 50 (step S57) and the WAP gateway 50 converts the WSP GET into HTTP GET and transmits it to the MMS system 20 (step S59).

The MMS system 20 converts the multimedia message into a format that can be supported by the receiving terminal 40 (step S61) and transmits a URL of the converted document and Notify.ind including an access code allowing access to the URL, to the SMS system 30 or the WAP PPG 80 (step S63).

The SMS system 30 converts the Notify.ind into an SMS format and transmits it to the receiving terminal 40, and the WAP PPG 80 converts the Notify.ind into an SI format message and pushes it to the receiving terminal 40. A short message transmitted by the SMS system 30 or the SI message transmitted by the WAP PPG 80 includes the URL of the converted multimedia message and an access code.

When the receiving terminal 40 receives the short message or the SI message from the SMS system 30 or the WAP PPG 80 and requests access to the URL, the receiving terminal 40 transmits WSP GET including the access code to the WAP gateway 50 (step S67), and the WAP gateway 50 converts the WSP GET into HTTP GET and transmits it to the MMS system 20 (step S69).

Upon receiving the HTTP GET, the MMS system 20 transmits a WML document corresponding to the URL as an HTTP resp to the WAP gateway 50 (step S71), and the WAP gateway 50 converts the HTTP resp into a WSP resp and transmits it to the receiving terminal 40 (step S73). Namely, the WAP gateway 50 converts the HTTP format message into the WSP format message or the WSP format message into the HTTP format message between the MMS system 20 and the MMS-not-supported receiving terminal 40.

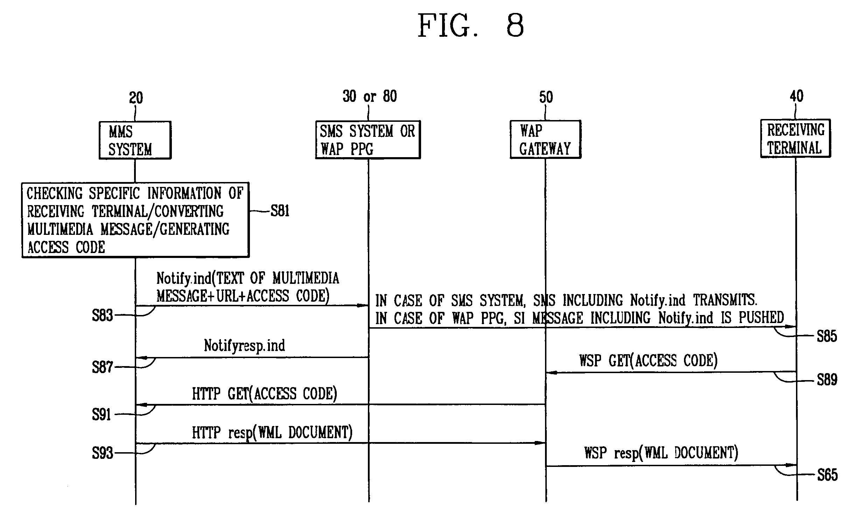

Figure 8 is a signal flow chart showing implementation of Figure 5.

The MMS system 20 receives the multimedia message from the transmission terminal and checks the specific information of the receiving terminal 40. If the receiving terminal 40 is the MMS-not-supported terminal, the MMS system 20 converts the multimedia message into the WML document and stores it, and then produces an access code allowing access to the WML document (step S81).

The MMS system 20 transmits the URL of the WML document and the access code, and a part or the whole of the text of the multimedia message to the SMS system 30 or the WAP PPG 80 (step S83), and the SMS system 30 or the WAP PPG 80 transmits the short message or the SI format message to the receiving terminal 40 (step S85).

When the receiving terminal 40 requests access to the URL of the WML document, the receiving terminal 40 transmits the WSP GET including the access code to the WAP gateway 50 (step S89), and the WAP gateway 50 converts the WSP GET into the HTTP GET and then transmits it to the MMS system 20 (step S91).

Upon receiving the HTTP GET, the MMS system 20 transmits the WML document corresponding to the URL as the HTTP resp to the WAP gateway 50 (step S93), and the WAP gateway 50 converts the HTTP resp into the WSP resp and transmits it to the receiving terminal 40 (step S95). Namely, the WAP gateway 50 converts the HTTP format message into the WSP format message or the WSP format message into the HTTP format message between the MMS system 20 and the MMS-not-supported receiving terminal 40.

As so far described, the system and method for making the multimedia message service compatible of the present invention has such an advantage that the multimedia message created in the MMS-supported terminal can be checked by the MMS-not-supported terminal, thereby enhancing users' convenience.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A system for making a multimedia message service compatible in a system transmitting a multimedia message, comprising:
a first system for converting a format of a multimedia message and transmitting a URL (Uniform Resource Locator) and an access code of the converted multimedia message, if the multimedia message transmitted from a transmission terminal cannot be implemented in a receiving terminal;
a second system for transmitting the URL and the access code received from the first system to the receiving terminal; and
the receiving terminal connected to the URL to receive the converted multimedia message.

2. The system of claim 1, further comprising:
a WAP (Wireless Application Protocol) gateway for transmitting a request for a multimedia message and its response message between the first system and the receiving terminal.

3. The system of claim 1, further comprising:
an HLR (Home Location Register) for storing specific information of terminals connected to the first system.

4. The system of claim 3, wherein the specific information includes at least one or more of a MSISDN (Mobile Station Integrated System Digital Network) and a MIN (Mobile Identification Number).

5. The system of claim 1, wherein the first system comprises:
a transmission/reception unit for transmitting/receiving a multimedia message and information about it;
a conversion unit for converting the multimedia message into a multimedia message of a format that can be implemented in the receiving terminal;
a storing unit for storing the multimedia message and the converted multimedia message;
an access code generation unit for generating an access code allowing access to a URL of the converted multimedia message and storing it;
an information checking unit for checking interworking programs mounted in the receiving terminal;
a notification unit for informing the receiving terminal of arrival of the multimedia message; and
an authentication unit for performing authentication to access the URL of the converted multimedia message.

6. The system of claim 5, wherein the storing unit comprises:
a region for storing the multimedia message received from a transmission terminal; and
a region for storing the multimedia message that has been converted through the conversion unit.

7. The system of claim 5, wherein the storing unit exists as a storing medium outside the first system.

8. The system of claim 5, wherein the access code generation unit generates a different access code each time by using a random number generation algorithm.

9. The system of claim 5, wherein the authentication unit performs authentication on the receiving terminal by using one of the following methods including:
a method of comparing an access code transmitted from the receiving terminal and an access code previously stored in the access code generation unit;
a method of comparing specific information of the receiving terminal and specific information previously stored in an HLR;
a method of comparing a password previously set by a receiver in the first system and a password inputted through the receiving terminal; and
a method of using specific information of the receiving terminal transformed by a security algorithm.

10. The system of claim 1, wherein the first system is an MMS (Multimedia Message Service) system.

11. The system of claim 1, wherein the second system is an SMS (Short Message Service) system.

12. The system of claim 11, wherein the SMS system transmits a short message including a URL of the transformed multimedia message and an access code.

13. The system of claim 12, wherein the short message includes at least one or more a text notifying of an arrival of the multimedia message, a text inquiring whether to access to the URL, and a part or the whole of a text included in the multimedia message.

14. The system of claim 1, wherein the second system is a WAP PPG (Push Proxy Gateway).

15. The system of claim 14, wherein the WAP PPG pushes an SI (Service indication) message including the URL of the transformed multimedia message and the access code to the receiving terminal.

16. The system of claim 15, wherein the SI message includes at least one or more a text notifying of an arrival of the multimedia message, a text inquiring whether to access to the URL, and a part or the whole of a text included in the multimedia message.

17. The system of claim 1, wherein the transmission terminal is an MMS-supported terminal.

18. The system of claim 1, wherein the receiving terminal is an MMS-not-supported terminal.

19. A method for making multimedia message service compatible in a system for transmitting a multimedia message, comprising:
a step in which if a receiving terminal is an MMS non-supported terminal, a first system converts a multimedia message into a format supportable in the receiving terminal and informs the receiving terminal about a URL and an access code of the converted multimedia message through the second system; a step in which the receiving terminal requests the multimedia message stored in the URL through a WAP gateway; and
a step in which the first system performs authentication on the request and transmits the converted multimedia message to the receiving terminal through the WAP gateway.

20. The method of claim 19, wherein the first system is an MMS system.

21. The method of claim 19, wherein the second system is an SMS system.

22. The method of claim 19, wherein the second system is a WAP PPG.

23. The method of claim 19, wherein the step of informing about the URL and the access code comprises:
a step in which the first system checks specific information of the receiving terminal;
a step in which if the receiving terminal is the MMS-not-supported terminal, the first system converts a format of the multimedia message into a format that is supported by the receiving terminal;
a step in which the first system produces an access code allowing access to a URL of the converted multimedia message;
a step in which the first system transmits the URL and the access code to the second system; and
a step in which the second system includes the URL and the access code in a certain message and transmits it to the receiving terminal.

24. The method of claim 23, wherein the step of converting the format of the multimedia message comprises:
a step in which if the receiving terminal is the MMS-not-supported terminal, the first system informs the receiving terminal of arrival of the multimedia through the second system; and
a step in which a request for the multimedia message is received from the receiving terminal through the WAP gateway.

25. The method of claim 23, wherein the certain message is a short message if the second system is the SMS system.

26. The method of claim 23, wherein the certain message is a message of an SI format if the second system is the WAP PPG.

27. The method of claim 19, wherein the step of transmitting the multimedia message to the receiving terminal comprises:
a step in which the first system performs authentication on the URL; and
a step in which when the authentication is completed, the multimedia message corresponding to the URL to the receiving terminal through the WAP gateway.

28. The method of claim 27, wherein the step of performing authentication comprises:
a step in which it is checked whether the access code transmitted from the receiving terminal and an access code previously stored in the first system are identical;
a step in which if the access codes are identical, authentication is performed; and
a step in which if the access codes are not identical, the receiving terminal is informed accordingly.

29. The method of claim 19, further comprising:
a step in which the receiving terminal that has received the transformed multimedia message activates a certain browser interworking with the multimedia message; and
a step in which the multimedia message is implemented through the browser.

30. A method for making a multimedia message service compatible, comprising:
a step in which a first system which has received a multimedia message from a transmission terminal checks information of a receiving terminal;
a step in which if the receiving terminal is an MMS-not-supported terminal, the first system informs a second system of arrival of the multimedia message through a notification unit;
a step in which the second system informs the receiving terminal of arrival of the multimedia message by using a certain message;
a step in which the first system receives a reception request for the multimedia message from the receiving terminal through a WAP gateway;
a step in which the first system transforms the multimedia message into a format that is supported by the receiving terminal through a transformation unit and generates an access code allowing access to a URL of the transformed multimedia message through an access code generation unit;
a step in which the first system transmits the URL of the transformed multimedia message and the access code to the second system;
a step in which the second system transmits the URL of the multimedia message and the access code as a certain message to the receiving terminal;
a step in which when the receiving terminal is connected to the URL through the WAP gateway, the first system performs authentication by using the access code; and
a step in which when the authentication is completed, the first system transmits the multimedia message to the receiving terminal through the WAP gateway.

31. The method of claim 30, wherein the step of checking the information of the receiving terminal comprises:
a step in which the first system checks specific information of the receiving terminal through an HLR; and
a step in which an interworking program mounted in the receiving terminal is checked through an information checking unit of the first system.

32. The method of claim 30, wherein the first system is an MMS system.

33. The method of claim 30, wherein the certain message transmitted by the second terminal is a short message if the second terminal is an SMS system.

34. The method of claim 30, wherein the certain message transmitted by the second terminal is a message of an SI format if the second terminal is a WAP PPG.

35. The method of claim 30, wherein, in the step in which the second system informs the receiving terminal of the arrival of the multimedia message, a part or the whole of a text of the multimedia message is included to be transmitted.

36. The method of claim 30, wherein, in the step in which the second system transmits the URL and the access code to the receiving terminal, a text inquiring whether to receive the multimedia message is additionally included to be transmitted.

37. A method for making a multimedia message service compatible comprising:
a step in which a first system which has received a multimedia message from a transmission terminal checks information of a receiving terminal;
a step in which if the receiving terminal is an MMS-not-supported terminal, the first system transforms the multimedia message into a format that is supported by the receiving terminal through a transformation unit and generates an access code allowing access to a URL of the transformed multimedia message through an access code generation unit;
a step in which the first system transmits the URL of the transformed multimedia message and the access code to a second system;
a step in which the second system transmits the URL of the multimedia message and the access code as a certain message to the receiving terminal;
a step in which when the receiving terminal is connected to the URL through a WAP gateway, the first system performs authentication by using the access code; and
a step in which when the authentication is completed, the first system transmits the multimedia message to the receiving terminal through the WAP gateway.

38. The method of claim 37, wherein the step of checking the information of the receiving terminal comprises:
a step in which the first system checks specific information of the receiving terminal through an HLR; and
a step in which an interworking program mounted in the receiving terminal is checked through an information checking unit of the first system.

39. The method of claim 37, wherein the first system is an MMS system.

40. The method of claim 37, wherein the certain message transmitted by the second terminal is a short message if the second terminal is an SMS system.

41. The method of claim 37, wherein the certain message transmitted by the second terminal is a message of an SI format if the second terminal is a WAP PPG.

42. The method of claim 37, wherein, in the step in which the second system transmits the URL and the access code to the receiving terminal, a text inquiring whether to receive the multimedia message and at least one or more of a part of the whole of the text of the multimedia message are additionally included to be transmitted.
